# EUROPÄISCHE PATENTSCHRIFT

(11) **EP 2 787 809 B1**
(45) Veröffentlichungstag und Bekanntmachung des Hinweises auf die Patenterteilung: **16.03.2016**
(21) Anmeldenummer: 12797895.5
(22) Anmeldetag: 05.12.2012
(51) Int. Cl.: A01M 7/00, A01C 23/00, A01G 27/00

(54) **ENTNAHMEVORRICHTUNG FÜR EIN PFLANZENSCHUTZMITTEL**
REMOVAL DEVICE FOR A PLANT PROTECTION AGENT
DISPOSITIF D'EXTRACTION POUR UN AGENT PHYTOSANITAIRE

(30) Priorität: 09.12.2011 EP 11192862
(43) Veröffentlichungstag der Anmeldung: 15.10.2014
(73) Patentinhaber: BASF SE, 67056 Ludwigshafen (DE)
(72) Erfinder: HUBER, Robert, 67117 Limburgerhof (DE); KOCH, Karl-Heinz, 76889 Kapellen-Drusweiler (DE); KRÖGER, Harald, 67459 Böhl-Iggelheim (DE); WEGKAMP, Heinz-Gerd, 68642 Bürstadt (DE); WINKLER, Christian-Andreas, 68163 Mannheim (DE)
(86) Internationale Anmeldenummer: PCT/EP2012/074452
(87) Internationale Veröffentlichungsnummer: WO 2013/083608

(56) Entgegenhaltungen:
- EP-A1- 0 424 571
- US-A- 4 790 454
- US-A1- 2004 035 949

## Beschreibung

Die vorliegende Erfindung betrifft eine Entnahmevorrichtung für ein Pflanzenschutzmittel. Die Entnahmevorrichtung umfasst einen Behälter, der eine Behälterwand und eine Entnahmeöffnung aufweist. Dabei umschließt die Behälterwand einen Innenraum zur Aufnahme des Pflanzenschutzmittels. Des Weiteren umfasst die Entnahmevorrichtung eine Pumpe, die eine Fördereinheit und eine Antriebseinheit umfasst.

Es sind Pflanzenschutzmittelbehälter bekannt, bei denen das Pflanzenschutzmittel durch die Entnahmeöffnung dadurch entnommen wird, dass der Behälter manuell so gedreht wird, dass die Entnahmeöffnung unten angeordnet ist. An die Entnahmeöffnung kann dann eine Leitung angeschlossen werden und das Pflanzenschutzmittel entweicht durch die Entnahmeöffnung aufgrund der Schwerkraft.

Nachteilig an solchen Pflanzenschutzmittelbehältern ist, dass ein solches Umdrehen des Behälters sehr kraftaufwendig und bei größeren und schwereren Behältern nicht mehr durchführbar ist. Wenn sich in einem Pflanzenschutzmittelbehälter mehr als 15 l Pflanzenschutzmittel befinden, ist ein manuelles Umdrehen des Behälters allenfalls sehr schwer möglich.

Des Weiteren ist es bekannt, das Pflanzenschutzmittel aus größeren Behältern mittels einer Pumpe zu entnehmen. Die Entnahmeöffnung wird hierfür über einen Schlauch mit der Pumpe verbunden, welche das im Innenraum des Behälters befindliche Pflanzenschutzmittel von außen absaugt.

Die in der EP 0 424 571 A1 beschriebene Einrichtung zur Feinzerstäubung von Flüssigkeiten besteht aus einem Gehäuse mit einem Sprühmechanismus und einer elektromotorisch angeriebenen Pumpe. Dabei ist eine Kupplung zwischen dem Gehäuse und dem Aufnahmebehälter für die Sprühflüssigkeit vorgesehen. Durch diese Kupplung kann bei gleichzeitiger Luftzuführung in den Aufnahmebehälter die Sprühflüssigkeit entnommen werden.

Nachteilig an solchen Entnahmevorrichtungen ist, dass die mit dem Pflanzenschutzmittell in Berührung kommenden Teile der Fördereinheit der Pumpe möglicherweise bereits in Verbindung mit Behältern verwendet wurden, die ein anderes Pflanzenschutzmittel enthielten. In diesem Fall besteht die Gefahr, dass es bei der Entnahme des Pflanzenschutzmittels durch die Fördereinheit der Pumpe zu einer Kontamination des Pflanzenschutzmittels mit einem anderen Pflanzenschutzmittel oder anderen Rückständen in der Fördereinheit der Pumpe kommt. Derartige Kontaminationen sollten jedoch unbedingt vermieden werden.

Die US 4 790 454 A beschreibt ferner eine Vorrichtung zur Beimischung einer Vielzahl von Flüssigkeiten, wobei eine Spülfunktion genutzt werden kann, um die Leitungen und die Vorrichtung von Kontaminationen zu reinigen. Diese Lösung ist jedoch mit einem zusätzlichen Spülschritt verbunden, bei dem möglicherweise durch Bedienfehler keine vollständige Dekontamination erfolgen kann.

Der vorliegenden Erfindung liegt daher die Aufgabe zugrunde, eine Entnahmevorrichtung für ein Pflanzenschutzmittel der eingangs genannten Art anzugeben, bei welcher das Pflanzenschutzmittel vor einer Kontamination geschützt ist.

Erfindungsgemäß wird diese Aufgabe durch eine Entnahmevorrichtung mit den Merkmalen des Anspruchs 1 gelöst. Vorteilhafte Ausgestaltungen und Weiterbildungen ergeben sich aus den abhängigen Ansprüchen.

Erfindungsgemäß ist bei der eingangs beschriebenen Entnahmevorrichtung die Fördereinheit so im Innenraum des Behälters angeordnet, dass mittels der Fördereinheit im Behälter befindliches Pflanzenschutzmittel durch die Entnahmeöffnung des Behälters aus dem Behälter heraus förderbar ist. Des Weiteren ist erfindungsgemäß die Antriebseinheit außerhalb des Innenraums des Behälters angeordnet. Sie treibt die Fördereinheit an.

Erfindungsgemäß ist somit die Fördereinheit der Pumpe in den Behälter integriert. Sie wird somit nur in Verbindung mit dem im Behälter befindlichen Pflanzenschutzmittel verwendet. Eine Kontamination des Pflanzenschutzmittels bei der Entnahme mittels der Fördereinheit der Pumpe kann auf diese Weise verhindert werden, da die Fördereinheit nicht in Verbindung mit anderen Pflanzenschutzmittelbehältern eingesetzt werden kann.

Gemäß einer Ausgestaltung der erfindungsgemäßen Entnahmevorrichtung ist Antriebseinheit lösbar an dem Behälter befestigt. Hierdurch erreicht man, dass die außerhalb des Behälters angeordnete Antriebseinheit von dem Behälter gelöst werden kann, um in Verbindung mit anderen Pflanzenschutzmittelbehältern eingesetzt zu werden, welche auch eine Fördereinheit im Innenraum des Behälters aufweisen. Hierdurch können die Vertriebskosten für ein Entnahmesystem mit der erfindungsgemäßen Entnahmevorrichtung gesenkt werden.

Gemäß einer Ausgestaltung der erfindungsgemäßen Entnahmevorrichtung erzeugt die Antriebseinheit eine mechanische Bewegung, die durch einen Durchtrieb durch die Behälterwand mechanisch an die Fördereinheit übertragen wird. Die Antriebseinheit umfasst beispielsweise einen Motor, der eine Drehbewegung erzeugt, die über eine Welle an die Fördereinheit übertragen wird. Die Welle tritt dabei durch den Durchtrieb in der Behälterwand durch und verbindet auf diese Weise die Antriebseinheit mit der Fördereinheit. In der Behälterwand ist insbesondere eine abgedichtet Öffnung für die Welle vorgesehen. Die Drehzahl des Motors ist insbesondere einstellbar, steuerbar und/oder regelbar. Auf diese Weise kann die Pumpe an verschiedene im Innenraum des Behälters befindliche Pflanzenschutzmittel angepasst werden.

Gemäß einer anderen Ausgestaltung treibt die Antriebseinheit die Fördereinheit hydraulisch an.

Gemäß einer Weiterbildung der erfindungsgemäßen Entnahmevorrichtung weist diese ein elektronisches Etikett auf, welches Daten zu dem Pflanzenschutzmittel speichert, welches sich in dem Behälter befindet. Bevorzugt weist in diesem Fall die Antriebseinheit einen elektronischen Empfänger auf, mittels welchem von dem elektrischen Etikett gespeicherte Daten empfangbar sind. Die Antriebseinheit ist in diesem Fall in Abhängigkeit von den empfangenen Daten des Empfängers einstellbar, steuerbar oder regelbar.

Bei dem elektronischen Etikett kann es sich beispielsweise um ein Funketikett oder einen Transponder handeln. Beispielsweise enthält das Etikett einen so genannten RFID (Radio Frequency identification)-Chip. Der elektronische Empfänger umfasst in diesem Fall ein Lesegerät, welches die über Funk übertragenen Daten empfangen und weiterverarbeiten kann. Alternativ können auch andere drahtlose Übertragungsstandards eingesetzt werden, insbesondere solche welche eine Nahfeldkommunikation ermöglichen.

An die Entnahmeöffnung des Behälters kann eine Ausstoßeinrichtung angeschlossen werden. Bei dieser Ausstoßeinrichtung kann es sich beispielsweise um eine Spritzpistole handeln, über welcher das Pflanzenschutzmittel herausgespritzt werden kann. Die Ausstoßeinrichtung umfasst eine Eingangsöffnung und eine Ausstoßöffnung. Bei der Ausstoßöffnung kann beispielsweise eine geeignete Düse vorgesehen sein.

Die vorliegende Erfindung betrifft ferner die Verwendung der vorstehend beschriebenen Entnahmevorrichtung zum Entnehmen eines Pflanzenschutzmittels, das sich im Innenraum des Behälters befindet. Die erfindungsgemäße Entnahmevorrichtung ist besonders für die Entnahme flüssiger Pflanzenschutzmittel geeignet. Die erfindungsgemäße Entnahmevorrichtung kann beispielsweise in Verbindung mit flüssigen Pflanzenschutzmitteln eingesetzt werden, die als EC, EW, SC, ME, SE oder OD formuliert sind. Diese Formulierungstypen sind dem Fachmann geläufig, und beispielsweise beschrieben in H. Mollet, A. Grubenmann "Formulation Technology", WILEY-VCH, Weinheim 2001, S. 389-397 und dort zitierte Literatur.

Unter einer EC versteht der Fachmann eine flüssige PflanzenschutzmittelFormulierung, in dem der bzw. die Pflanzenschutzwirkstoffe als homogene Lösung in einem mit Wasser nicht mischbaren organischen Lösungsmittel bzw. Lösungsmittelgemisch vorliegen, wobei die Lösung beim Verdünnen mit Wasser eine Emulsion ergibt.

Unter einer EW versteht der Fachmann eine flüssige Pflanzenschutzmittel-Formulierung, in dem der bzw. die Pflanzenschutzwirkstoffe in Form einer Öl-in-Wasser-Emulsion vorliegen, wobei wenigstens einer der Pflanzenschutzwirkstoffe in den Öltröpfchen vorliegt.

Unter einem SC versteht der Fachmann eine flüssige Pflanzenschutzmittel-Formulierung, in dem der bzw. die Pflanzenschutzwirkstoffe in Form von festen, feinteiligen Partikeln vorliegen, die in einer wässrigen kohärenten Phase suspendiert sind. Diese Formulierungen werden auch als Suspensionskonzentrate bezeichnet.

Unter einer ME versteht der Fachmann eine flüssige Pflanzenschutzmittel-Formulierung, in dem der bzw. die Pflanzenschutzwirkstoffe in Form einer Mikroemulsion vorliegen, wobei typischerweise wenigstens einer der Pflanzenschutzwirkstoffe typischerweise gelöst in der organischen Phase vorliegt. Unter einem OD versteht der Fachmann eine flüssige Pflanzenschutzmittel-Formulierung, in dem der bzw. die Pflanzenschutzwirkstoffe in Form von festen, feinteiligen Partikeln vorliegen, die in einer nicht-wässrigen kohärenten Phase suspendiert sind. Diese Formulierungen werden auch als Öldispersionskonzentrate bezeichnet.

Unter einem SE versteht der Fachmann eine flüssige Pflanzenschutzmittel-Formulierung, in dem der bzw. die Pflanzenschutzwirkstoffe in Form von festen, feinteiligen Partikeln vorliegen, die in einer nicht-wässrigen flüssigen Phase suspendiert sind, die ihrerseits in einer wässrigen Phase emulgiert ist. Diese Formulierungen werden auch als Suspoemulsionskonzentrate bezeichnet.

Die vorgenannten Formulierungen enthalten neben einem oder mehreren, vorzugsweise organischen Pflanzenschutzwirkstoffen und wenigstens einem wässrigen oder nicht-wässrigen Verdünnungsmittel, in der Regel wenigstens eine oberflächenaktive Substanz, die häufig unter anionischen und nichtionischen Emulgatoren sowie unter anionischen und nichtionischen polymeren Dispergierhilfsmitteln ausgewählt ist und die der Bildung stabiler Suspensionen bzw. Emulsionen beim Verdünnen der Formulierung mit Wasser, sowie im Falle mehrphasiger flüssiger Formulierungen wie EW, SC, ME, OD oder SE, der Stabilisierung der Phasen dienen. Gegebenenfalls enthalten die Formulierungen sogenannte Adjuvantien, welche die Wirksamkeit der des bzw. der Pflanzenschutzmittel verbessern. Weiterhin enthalten die Formulierungen in der Regel ein oder mehrere Additive, wie Additive zur Modifizierung der rheologischen Eigenschaften, Frostschutzmittel, Farbmittel und Biozide in den für den jeweiligen Formulierungstyp üblichen Mengen.

Die Erfindung wird nun anhand eines Ausführungsbeispiels mit Bezug zu den Figuren erfäutert.
- Figur 1: zeigt eine schematische Schnittdarstellung eines Ausführungsbeispiels der erfindungsgemäßen Entnahmevorrichtung,
- Figur 2: zeigt eine Schaltzeichnung eines Ausführungsbeispiels der erfindungsgemäßen Entnahmevorrichtung einschließlich der Ausstoßeinrichtung.

Die Entnahmevorrichtung umfasst einen Behälter 1, der einen Innenraum 7, einen Boden 8, Seitenwände 18 und eine obere Wand 19 aufweist. Die obere Wand 19 weist eine Entnahmeöffnung 9 auf. Das Pflanzenschutzmittel wird im Innenraum 7 des Behälters 1 aufgenommen.

Innerhalb der Entnahmevorrichtung befindet sich ein Saugrohr 3. Das Saugrohr 3 weist eine Öffnung 10 auf, welche im unteren Bereich 11 benachbart zu dem Boden 8 des Behälters 1 angeordnet ist. Die Öffnung 10 befindet sich so nahe am Boden 8 wie möglich. Sie weist jedoch einen solchen Abstand vom Boden 8 auf, dass das flüssige Pflanzenschutzmittel ungehindert über die Öffnung 10 in das Saugrohr 3 eintreten kann. Der Abstand der Öffnung 10 vom Boden 8 kann beispielsweise von der Viskosität des Pflanzenschutzmittels abhängen, welches von dem Behälter 1 aufgenommen werden soll.

Von der Öffnung 10 in der Nähe des Bodens 8 des Behälters 1 erstreckt sich das Saugrohr 3 zu einer Fördereinheit 2 einer Pumpe der Entnahmevorrichtung. Die Fördereinheit ist im Innenraum 7 der Entnahmevorrichtung angeordnet. Das im Innenraum 7 des Behälters 1 befindliche Pflanzenschutzmittel wird mittels der Fördereinheit 2 bei der Öffnung 10 des Saugrohrs 3 angesogen und durch die Fördereinheit 2 hindurch nach oben gefördert. Im oberen Bereich 12 des Behälters 1 tritt ein Anschluss 5 von der Fördereinheit 2 durch die Entnahmeöffnung 9 bei der oberen Wand 19 des Behälters 1 hindurch. Über diesen Anschluss 5 wird das im Innenraum 7 des Behälters 1 befindliche Pflanzenschutzmittel aus dem Behälter 1 heraus gefördert. An den Anschluss 5 kann beispielsweise ein Schlauch, eine Leitung oder eine nachfolgende Ausstoßeinrichtung, wie beispielsweise eine Spritzpistole, angeschlossen werden.

Die Pumpe der Entnahmevorrichtung umfasst des Weiteren eine Antriebseinheit 6. Diese ist jedoch nicht im Innenraum 7 des Behälters 1 untergebracht. Sie ist vielmehr außen an dem Behälter 1 lösbar befestigt. Für die Kopplung der Antriebseinheit 6 mit der Fördereinheit 2 ist in der oberen Wand 19 des Behälters 1 ein Durchtrieb 4 vorgesehen. Beispielsweise kann die obere Wand 19 eine weitere abgedichtete Öffnung aufweisen, durch welche eine Welle durchtritt. Die Welle ist zum einen mit der Fördereinheit 2 und zum anderen mit der Antriebseinheit 6 gekoppelt. Wenn die Antriebseinheit 6 von der Entnahmevorrichtung gelöst wird, um sie z. B. in Verbindung mit einer anderen Entnahmevorrichtung zu verwenden, wird der Eingriff der Welle mit der Antriebseinheit 6 gelöst.

Die Antriebseinheit 6 umfasst einen Motor, dessen Drehbewegung über die Welle an die Fördereinheit 2 übertragen wird. Der Motor ist mit einem Steuergerät verbunden, welches die Drehzahl des Motors einstellt, steuert oder regelt.

Gemäß einem speziellen Ausführungsbeispiel der Entnahmevorrichtung ist an dem Behälter 1 der erfindungsgemäßen Entnahmevorrichtung ein elektronisches Etikett 16 befestigt, wie beispielsweise ein RFID-Chip. Auf dem RFID-Chip sind Daten zu dem Pflanzenschutzmittel gespeichert, welches sich im Innenraum 7 des Behälters 1 befindet. Ferner weist die Antriebseinheit 6 ein zu dem RFID-Chip korrespondierenden elektronischen Empfänger 17 auf, welcher die auf dem RFID-Chip gespeicherten Daten auslesen kann. Der Empfänger 17 überträgt die von dem RFID-Chip 16 empfangenen Daten an das Steuergerät der Antriebseinheit 6. Das Steuergerät steuert dann den Motor der Antriebseinheit in Abhängigkeit von den empfangenen Daten. Beispielsweise kann die Drehzahl des Motors in Abhängigkeit von der Viskosität des im Innenraum 7 des Behälters 1 befindlichen Pflanzenschutzmittels oder in Abhängigkeit von dem Wirkstoff oder der Wirkstoffkonzentration des Pflanzenschutzmittels gesteuert werden.

Nachdem das gesamte Pflanzenschutzmittel aus dem Innenraum 7 des Behälters 1 entnommen wurde, kann somit die Antriebseinheit 6 entfernt werden, der Behälter 1 entsorgt oder für eine Wiederverwendung bearbeitet werden und die Antriebseinheit 6 mit einem anderen Behälter 1 zur Entnahme des darin befindlichen Pflanzenschutzmittels gekoppelt werden.

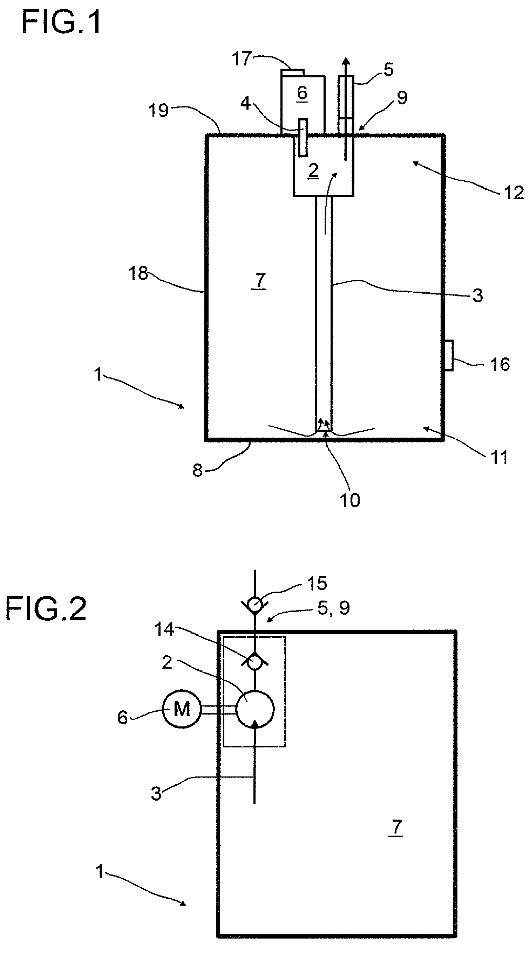

In Fig. 2 ist der Aufbau des Ausführungsbeispiels der Entnahmevorrichtung anhand von Schaltzeichen gezeigt. Das im Innenraum 7 befindliche Pflanzenschutzmittel wird über das Saugrohr 3 zu der Fördereinheit 2 der Pumpe gefördert. Die Fördereinheit 2 wird von dem Motor der Antriebseinheit 6 angetrieben. Hinter der Fördereinheit 2 ist ein Rückschlagventil 14 angeordnet, welches beim Abkuppeln des Behälters 1 sicherstellt, dass kein Pflanzenschutzmittel ausläuft oder nachtropft.

Hinter dem Rückschlagventil 14 wird das Pflanzenschutzmittel durch die Entnahmeöffnung 9 und den Anschluss 5 aus dem Behälter 1 herausgefördert. An den Anschluss 5 kann eine nachfolgende Ausstoßeinrichtung angeschlossen sein. Diese kann ein weiteres Rückschlagventil 15 aufweisen, welches verhindert, dass das entnommene Pflanzenschutzmittel zurück in den Innenraum 7 des Behälters 1 gelangen kann.

Die vorstehend beschriebene Entnahmevorrichtung wird gemäß Ausführungsbeispielen der Erfindung für die eingangs genannten Pflanzenschutzmittel eingesetzt. Diese Pflanzenschutzmittel werden bei dieser Verwendung in den Innenraum 7 des Behälters 1 gefüllt. Sie werden dann in gewünschter Weise z. B. mittels einer Ausstoßeinrichtung versprüht.

### Bezugszeichenliste:

- 1: Behälter
- 2: Pumpe
- 3: Saugrohr
- 4: Durchtrieb
- 5: Anschluss
- 6: Motor
- 7: Innenraum des Behälters 1
- 8: Boden des Behälters 1
- 9: Entnahmeöffnung des Behälters 1
- 10: erste Öffnung des Saugrohrs 3
- 11: unterer Bereich des Behälters 1
- 12: oberer Bereich des Behälters 1
- 14: Rückschlagventil
- 15: Rückschlagventil
- 16: elektronisches Etikett
- 17: elektronischer Empfänger
- 18: Seitenwand des Behälters 1
- 19: obere Wand des Behälters 1

## Patentansprüche

1. Entnahmevorrichtung für ein Pflanzenschutzmittel mit
- einem Behälter (1), der eine Behälterwand (8, 18, 19) und eine Entnahmeöffnung (9) aufweist, wobei die Behälterwand (8, 18, 19) einen Innenraum (7) zur Aufnahme des Pflanzenschutzmittels umschließt, und
- einer Pumpe (2, 6), die eine Fördereinheit (2) und eine Antriebseinheit (6) umfasst, wobei die Antriebseinheit (6) außerhalb des Innenraums (7) des Behälters (1) angeordnet ist und die Fördereinheit (2) antreibt, **dadurch gekennzeichnet, dass**
- die Fördereinheit (2) so im Innenraum (7) des Behälters (1) angeordnet ist, dass mittels der Fördereinheit (2) im Behälter (1) befindliches Pflanzenschutzmittel durch die Entnahmeöffnung (9) des Behälters (1) aus dem Behälter (1) heraus förderbar ist.

2. Entnahmevorrichtung nach Anspruch 1, **dadurch gekennzeichnet, dass** Antriebseinheit (6) lösbar mit dem Behälter gekoppelt ist.

3. Entnahmevorrichtung nach Anspruch 1 oder 2, **dadurch gekennzeichnet, dass** die Antriebseinheit (6) eine mechanische Bewegung erzeugt, die durch einen Durchtrieb (4) durch die Behälterwand (19) mechanisch an die Fördereinheit (2) übertragen wird.

4. Entnahmevorrichtung nach Anspruch 3, **dadurch gekennzeichnet, dass** die Antriebseinheit (6) einen Motor umfasst, der eine Drehbewegung erzeugt, die über eine Welle an die Fördereinheit (2) übertragen wird.

5. Entnahmevorrichtung nach Anspruch 4, **dadurch gekennzeichnet, dass** die Drehzahl des Motors einstellbar, steuerbar oder regelbar ist.

6. Entnahmevorrichtung nach einem der vorhergehenden Ansprüche, **dadurch gekennzeichnet, dass** die Entnahmevorrichtung ein elektronisches Etikett (16) aufweist, welches Daten zu dem Pflanzenschutzmittel speichert, welches sich in dem Behälter (1) befindet.

7. Entnahmevorrichtung nach Anspruch 6, **dadurch gekennzeichnet, dass** die Antriebseinheit (6) einen elektronischen Empfänger (17) umfasst, mittels welchem von dem elektronischen Etikett (16) gespeicherte Daten empfangbar sind, und dass die Antriebseinheit (6) in Abhängigkeit von den empfangenen Daten des Empfängers (17) einstellbar, steuerbar oder regelbar ist.

8. Verwendung der Entnahmevorrichtung nach einem der vorhergehenden Ansprüche zum Entnehmen eines Pflanzenschutzmittels, das sich im Innenraum (7) des Behälters (1) befindet.

## Claims

1. A discharge apparatus for a plant protection product with
- a container (1), which has a container wall (8, 18, 19) and a discharge orifice (9), the container wall (8, 18, 19) enclosing an interior (7) for accommodating the plant protection product, and
- a pump (2, 6), which comprises a delivery unit (2) and a drive unit (6), the drive unit (6) being arranged outside the interior (7) of the container (1) and driving the delivery unit (2),
wherein
- the delivery unit (2) is arranged in the interior (7) of the container (1) in such a way that plant protection product located in the container (1) can be delivered out of the container (1) through the discharge orifice (9) of the container (1) by means of the delivery unit (2).

2. The discharge apparatus according to claim 1, wherein the drive unit (6) is coupled releasably to the container.

3. The discharge apparatus according to claim 1 or 2, wherein the drive unit (6) generates a mechanical motion which is transmitted by a drive-through mechanism (4) through the container wall (19) mechanically to the delivery unit (2).

4. The discharge apparatus according to claim 3, wherein the drive unit (6) comprises a motor, which generates a rotary motion which is transmitted via a shaft to the delivery unit (2).

5. The discharge apparatus according to claim 4, wherein the rotational speed of the motor can be set, controlled or regulated.

6. The discharge apparatus according to any one of the preceding claims, wherein the discharge apparatus has an electronic tag (16), which stores data relating to the plant protection product located in the container (1).

7. The discharge apparatus according to claim 6, wherein the drive unit (6) comprises an electronic receiver (17), by means of which data stored by the electronic tag (16) can be received, and wherein the drive unit (6) can be set, controlled or regulated depending on the data received by the receiver (17).

8. The use of the discharge apparatus according to any one of the preceding claims for discharging a plant protection product located in the interior (7) of the container (1).

## Revendications

1. Dispositif d'extraction pour un agent phytosanitaire, comprenant
- un récipient (1) qui présente une paroi de récipient (8, 18, 19) et une ouverture d'extraction (9), la paroi de récipient (8, 18, 19) entourant un espace interne (7) pour recevoir l'agent phytosanitaire, et
- une pompe (2, 6) qui comprend une unité de refoulement (2) et une unité d'entraînement (6), l'unité d'entraînement (6) étant disposée à l'extérieur de l'espace interne (7) du récipient (1) et entraînant l'unité de refoulement (2),
**caractérisé en ce que**
- l'unité de refoulement (2) est disposée dans l'espace interne (7) du récipient (1) de telle sorte qu'au moyen de l'unité de refoulement (2), l'agent phytosanitaire se trouvant dans le récipient (1) puisse être refoulé à travers l'ouverture d'extraction (9) du récipient (1) hors du récipient (1).

2. Dispositif d'extraction selon la revendication 1, **caractérisé en ce que** l'unité d'entraînement (6) est accouplée de manière amovible au récipient.

3. Dispositif d'extraction selon la revendication 1 ou 2, **caractérisé en ce que** l'unité d'entraînement (6) génère un mouvement mécanique qui est transféré mécaniquement par une transmission (4) à travers la paroi du récipient (19) à l'unité de refoulement (2).

4. Dispositif d'extraction selon la revendication 3, **caractérisé en ce que** l'unité d'entraînement (6) comprend un moteur qui génère un mouvement de rotation qui est transmis par le biais d'un arbre à l'unité de refoulement (2).

5. Dispositif d'extraction selon la revendication 4, **caractérisé en ce que** la vitesse de rotation du moteur peut être ajustée, commandée ou réglée.

6. Dispositif d'extraction selon l'une quelconque des revendications précédentes, **caractérisé en ce que** le dispositif d'extraction présente une étiquette électronique (16) qui mémorise des données concernant l'agent phytosanitaire qui se trouve dans le récipient (1).

7. Dispositif d'extraction selon la revendication 6, **caractérisé en ce que** l'unité d'entraînement (6) comprend un récepteur électronique (17) au moyen duquel des données mémorisées par l'étiquette électronique (16) peuvent être reçues, et **en ce que** l'unité entraînement (6) peut être ajustée, commandée ou réglée en fonction des données reçues par le récepteur (17).

8. Utilisation du dispositif d'extraction selon l'une quelconque des revendications précédentes pour extraire un agent phytosanitaire qui se trouve dans l'espace interne (7) du récipient (1).
